# EUROPÄISCHE PATENTANMELDUNG

(11) **EP 0 888 842 A1**
(43) Veröffentlichungstag der Anmeldung: **07.01.1999**
(21) Anmeldenummer: 98111515.7
(22) Anmeldetag: 23.06.1998
(51) Int. Cl.: B23D 77/00, B23B 51/02, B23B 51/04

(54) **Rotierendes Schaftwerkzeug**

(30) Priorität: 03.07.1997 DE 19728384
(71) Anmelder: August Beck GmbH & Co., D-72474 Winterlingen (DE)
(72) Erfinder: Ritter, Otto, 72474 Winterlingen (DE)
(74) Vertreter: Maser, Jochen, Dipl.-Ing.

(57) **Zusammenfassung**

Die Erfindung betrifft ein rotierendes Schaftwerkzeug zur Bearbeitung von Bohrungen, insbesondere Sacklochbohrungen, mit einem Schaft (12), in dem zumindest ein Längskanal (17) für Kühl-/Schmiermittel vorgesehen ist, mit einem Schneidkopf (13), der zumindest eine Schneide (19) und einen Spanraum (14) aufweist, dadurch gekennzeichnet, daß ein sich zur Stirnseite (18) des Schneidkopfes (13) verjüngender Spanraumabschnitt (22) vorgesehen ist.

## Beschreibung

Die Erfindung betrifft ein rotierendes Schaftwerkzeug zur Bearbeitung von Bohrungen, insbesondere Sacklochbohrungen, gemäß dem Oberbegriff des Anspruchs 1.

Zur Bearbeitung von Bohrungen, insbesondere zur Feinbearbeitung oder Hochleistungsbearbeitung, sind bereits rotierende Schaftwerkzeuge bekannt geworden, die als Ein- oder Mehrschneidenreibahle ausgebildet sind. Die Reibahlen weisen einen Schaft auf, in dem sich zumindest ein Längskanal für Kühl-/Schmiermittel erstreckt. Der Schaft ist mit einem Schneidkopf verbunden, der zumindest einen Spanraum bzw. Spannut hat. Dieser Spanraum weist zumindest im Bereich der Haupt- und Nebenschneide einen konstanten Querschnitt auf. Dieser kontinuierliche Querschnitt des Spanraumes kann in einen Nutenauslaufbereich übergehen, der dann zumeist gegenüber dem kontinuierlichen Querschnitt des Spanraumes vergrößert ist.

Derartige rotierende Schaftwerkzeuge weisen den Nachteil auf, daß insbesondere bei der Bearbeitung von Sacklochbohrungen eine ausreichende Spanabfuhr für einen störungsfreien Betrieb nicht gegeben ist. Zwar wird die Kühl-/Schmiermittelflüssigkeit mit hohen Drücken über einen Längskanal in die Sacklochbohrung eingebracht, um in dem Grund der Bohrung umgelenkt zu werden, damit das Kühl-/Schmiermittel über die Spanräume aus der Sacklochbohrung nach oben austreten und die Späne abtransportieren kann. Die aus der Sacklochbohrung nicht abtransportierten Späne bewirken, daß eine Beeinträchtigung der zu bearbeitenden Bohrungsoberfläche gegeben ist, wodurch Werkstücke für den weiteren Einsatz unbrauchbar werden.

Der Erfindung liegt deshalb die Aufgabe zugrunde, ein rotierendes Schaftwerkzeug zu schaffen, bei dem ein schneller und nahezu vollständiger Abtransport der Späne, insbesondere bei der Hochleistungsbearbeitung ermöglicht ist.

Diese Aufgabe wird erfindungsgemäß durch das kennzeichnende Merkmal des Anspruchs 1 gelöst.

Die erfindungsgemäße Ausbildung des Spanraumes weist den Vorteil auf, daß durch die Verjüngung des Spanraumes an der Stirnseite des Schneidkopfes eine Sogwirkung in dem sich daran anschließenden vergrößerten Spanraum aufgrund des erzeugten Unterdruckes entsteht, wodurch die Späne nicht zum Boden des Sackloches gelangen, sondern in Richtung auf eine Werkzeugaufnahme des rotierenden Werkzeuges aus der Bohrung ausgespült werden. Somit tritt bei dem Spanabtransport im Bereich des sich verjüngenden Abschnitts, der sich zum nachfolgenden Spanraumabschnitt vergrößert, ein Venturi-Effekt ein, der im Zusammenhang mit der Zuführung des Kühl-/Schmiermittels in einem Kanal des Schaftwerkzeuges das Herausführen der Späne aus der Sacklochbohrung sicherstellt.

Nach einer vorteilhaften Ausgestaltung der Erfindung ist vorgesehen, daß der engste Querschnitt des sich verjüngenden Spanraumes im Bereich der Hauptschneide liegt. Somit tritt der Venturi-Effekt, der zur Verbesserung des Abtransportes der Späne dient, in dem Bereich auf, in dem der größte Teil der herauszutransportierenden Späne anfällt, wodurch die Wirkung wesentlich erhöht werden kann. Dadurch kann die Oberflächenqualität der Sacklochbohrung verbessert werden.

Nach einer vorteilhaften Ausgestaltung der Erfindung ist vorgesehen, daß der sich verjüngende Abschnitt des Spanraumes in einen weiteren Spanraumabschnitt übergeht, der vorzugsweise einen konstanten Querschnitt aufweist. Dadurch kann eine einfache Bearbeitung des Spanraumes ermöglicht sein. Dies ist vorteilhafterweise dann gegeben, wenn der Verlauf einer Seitenfläche des Innenspanraumes von dem verjüngenden Spanraumabschnitt einem Durchmesser eines Fräsers entspricht, mit dem der Spanraum hergestellt wird. Somit kann eine Linearbewegung des Bearbeitungswerkzeuges genügen, um die Verjüngung des Spanraumes herzustellen. Des weiteren kann vorzugsweise vorgesehen sein, daß eine bahngesteuerte Führung des Fräsers zur Herstellung des Spanraumes vorgesehen sein kann, um eine entsprechende Geometrie für den sich verjüngenden Spanraum herzustellen.

In den weiteren, abhängigen Ansprüchen sind vorteilhafte Weiterbildungen und Ausgestaltungen der Erfindung angegeben.

In der Zeichnung und der nachfolgenden Beschreibung ist ein bevorzugtes Ausführungsbeispiel der Erfindung näher dargestellt. Es zeigen
- Fig. 1: eine schematische Seitenansicht eines rotierenden Schaftwerkzeuges mit einem Halbschnitt und
- Fig. 2: eine schematische Ansicht auf eine Stirnseite eines Schneidkopfes des erfindungsgemäßen Schaftwerkzeuges.

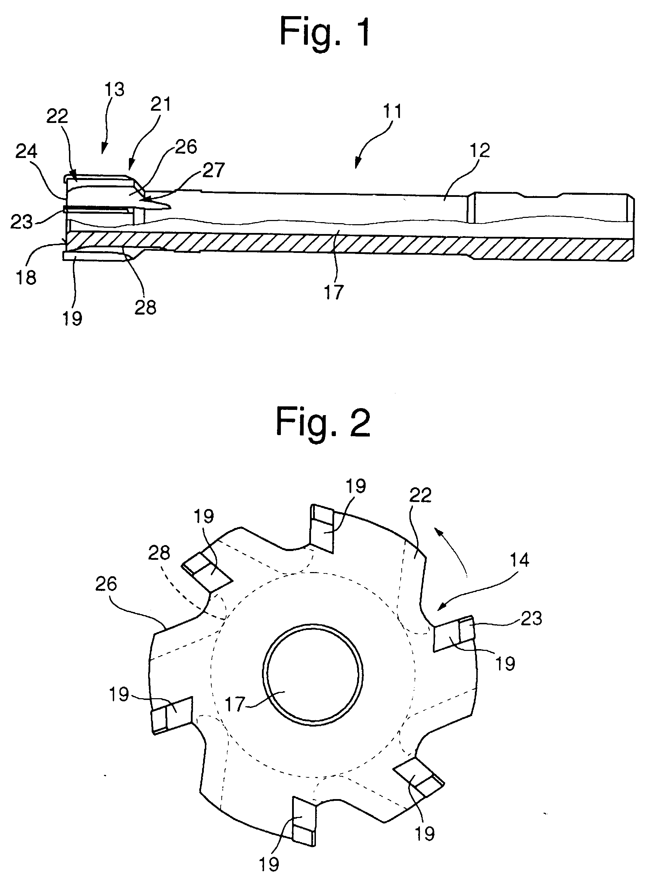

In Fig. 1 ist ein rotierendes Schaftwerkzeug 11 dargestellt, das einen zylindrischen Schaft 12 sowie einen Schneidkopf 13 aufweist. Der Schneidkopf 13 kann als Formkopf aus Schneidmaterial hergestellt und in dem Schaft aus weniger hochwertigem Material eingesetzt sein. Ebenso kann vorgesehen sein, daß das rotierende Schneidwerkzeug einstückig aus einem Schneidenmaterial hergestellt ist.

Der Schneidkopf 13 weist Spanräume 14 auf, an die sich zum Schaft 12 hinweisend, ein Auslaufbereich 16 vorgesehen ist. In dem Schaft 12 und Schneidkopf 13 ist ein Längskanal 17, der vorzugsweise zentral im Schaftwerkzeug 11 verläuft, vorgesehen, um Kühl- bzw. Schmiermittelflüssigkeit oder eine Kühlemulsion in die Bohrung zu führen.

In Figur 2 ist eine Draufsicht auf eine Stirnseite 18 des Schneidkopfes 13 dargestellt. Dieser Schneidkopf 13 weist beispielsweise sechs Schneiden 19 auf, denen vorauseilend jeweils ein Spanraum 14 zugeordnet ist. Bei dem vorliegenden Ausführungsbeispiel handelt es sich um eine Mehrschneidenreibahle für die Fein- bzw. Hochleistungsfeinbearbeitung, wobei der Einsatz von derartigen Schaftwerkzeugen insbesondere für Sacklochbohrungen vorgesehen ist.

Der Spanraum 14 weist einen Abschnitt 21 mit einem konstanten Querschnitt auf, der in Richtung zur Stirnseite 18 des Schneidkopfes 13 gesehen, in einen sich verjüngenden Spanraumabschnitt 22 übergeht. Dieser Abschnitt 22 weist im Bereich einer Hauptschneide 23 seinen engsten Querschnitt 24 auf. Der sich verjüngende Abschnitt 22 des Spanraumes 14 weist vorteilhafterweise eine gleichförmige Querschnittsverringerung auf, wodurch sowohl eine Seitenfläche 26 des Innenspanraumes 27 als auch ein Spangrund 28 sich kontinuierlich verjüngen. Alternativ kann vorgesehen sein, daß sich beispielsweise nur die Seitenfläche zur Verjüngung des Spanraumabschnitts 22 oder auch nur der Spangrund 28 dazu beiträgt. Die Verjüngung zwischen dem engsten Querschnitt 24 und dem Abschnitt 21 des Spanraumes 14 kann grundsätzlich in der Geometrie beliebig ausgebildet sein. Wesentlich ist jedoch, daß dieser Abschnitt 21 im Querschnitt gegenüber dem Abschnitt 22 größer ausgebildet ist und eine Art Düsenform aufweist, wodurch der Venturi-Effekt erzielbar ist, d.h. daß eine Sogwirkung in dem vergrößerten Spanraumabschnitt 21 aufgrund des darin erzeugten Unterdruckes gegenüber dem engsten Querschnitt 24 entsteht. Vorteilhafterweise ist der sich verjüngende Spanraumabschnitt 22 derart ausgebildet, daß mit einem Fräser eine einfache und schnelle Bearbeitung vorgesehen ist. Somit kann beispielsweise die Spanraumverjüngung als Rundung ausgebildet sein, wobei der Außendurchmesser des Fräsers der Geometrie der Rundung entspricht. Alternativ kann vorgesehen sein, daß ein elliptischer Verlauf oder dergleichen vorgesehen sein kann, welcher beispielsweise durch bahngesteuerte Bearbeitung herstellbar ist. Ebenso können ebene Schrägen oder dergleichen vorgesehen sein.

Die Spanraumverjüngung 22 weist darüber hinaus den Vorteil auf, daß eine unterstützende Wirkung und Führung des Spanes zu dessen Abtransport über den vergrößerten Abschnitt 21 des Spanraumes 14 aus der Sacklochbohrung heraus ermöglicht ist.

Es kann desweiteren vorgesehen sein, daß auf der Stirnseite 18 des Schneidkopfes 13 von dem Längskanal 17 zum Spanraum 14 führende Vertiefungen vorgesehen sind, wodurch eine Zuführung der Flüssigkeit begünstigt werden kann.

Des weiteren kann alternativ vorgesehen sein, daß der Abschnitt 21 des Spanraumes 14 nicht einen konstanten Querschnitt aufweist, sondern sich ebenfalls aufweitet. Diese Aufweitung kann konstant oder durch weitere geometrische Ausgestaltung erfolgen.

Bei der Hochleistungsbearbeitung von Sacklochbohrungen ist von Bedeutung, daß die anfallende Späne schnell und sicher aus der Sacklochbohrung herausgeführt werden und nicht sich am Boden ansammeln. Zur Unterstützung des Abtransportes wird über den Längskanal 17 während der Fein- bzw. Hochleistungsfeinbearbeitung Kühl-/Schmiermittel unter hohem Druck über den Längskanal 17 des Schaftwerkzeuges 11 in die Sacklochbohrung eingepresst. Die an der Stirnseite 24 austretende Kühlflüssigkeit wird am Boden der Sacklochbohrung umgelenkt und gelangt vorzugsweise über die Vertiefungen an der Stirnseite 18 unmittelbar in die Spanräume 14. Durch die düsenförmige Ausbildung des Spanraumes 14 bzw. des Abschnittes 21 werden die Späne über den größeren Spanraumabschnitt 21 aus der Sacklochbohrung herausgespült. Durch die Sogwirkung in dem vergrößerten Spanraumabschnitt 21 aufgrund des Unterdruckes wird das Ausspülen verstärkt.

Alternativ kann vorgesehen sein, daß ein verjüngender Spanraum 22 bei einer Vielzahl von rotierenden Schaftwerkzeugen einsetzbar ist, welche für den spanabhebenden Einsatz bestimmt sind. Beispielsweise kann dies bei Einschneidenreibahlen sowohl für die Fein- als auch für die Hochleistungsfeinbearbeitung vorgesehen sein. Ebenso kann die Spanraumverjüngung 22 bei Bohrern, insbesondere Wendeschneidplattenbohrer oder dergleichen, eingesetzt werden.

Durch diese erfindungsgemäße Ausgestaltung der Spanraumverjüngung 22 kann darüber hinaus erzielt werden, daß der Vorschub bei der Bearbeitung von Bohrungen erhöht werden kann, da ein schnelleres und besseres Herausspülen der Späne aus der Sacklochbohrung gegeben ist. Dadurch können die Bearbeitungszeiten erheblich reduziert werden, wodurch die Effektivität bei hoher Bearbeitungsqualität erheblich gesteigert werden kann.

## Patentansprüche

1. Rotierendes Schaftwerkzeug zur Bearbeitung von Bohrungen, insbesondere Sacklochbohrungen, mit einem Schaft (12), in dem zumindest ein Längskanal (17) für Kühl-/Schmiermittel vorgesehen ist, mit einem Schneidkopf (13), der zumindest eine Schneide (19) und einen Spanraum (14) aufweist, dadurch gekennzeichnet, daß ein sich zur Stirnseite (18) des Schneidkopfes (13) verjüngender Spanraumabschnitt (22) vorgesehen ist.

2. Schaftwerkzeug nach Anspruch 1, dadurch gekennzeichnet, daß der engste Querschnitt (24) des Spanraumes (14) im Bereich der Hauptschneide (23) liegt.

3. Schaftwerkzeug nach Anspruch 1 oder 2, dadurch gekennzeichnet, daß der sich verjüngende Spanraumabschnitt (22) an den engsten Querschnitt (24) des Spanraumes (14) anschließt und düsenförmig ausgebildet ist.

4. Schaftwerkzeug nach einem der vorhergehenden Ansprüche, dadurch gekennzeichnet, daß der sich verjüngende Spanraumabschnitt (22) in zumindest einen sich daran anschließenden Abschnitt (21) des Spanraumes (14) übergeht, der vorzugsweise einen größeren Querschnitt als der engste Querschnitt (24) aufweist.

5. Schaftwerkzeug nach Anspruch 4, dadurch gekennzeichnet, daß der Abschnitt (21) des Spanraumes (14) einen konstanten Querschnitt aufweist.

6. Schaftwerkzeug nach einem der Ansprüche 1 bis 4, dadurch gekennzeichnet, daß der Spanraumabschnitt (21) eine kontinuierliche Verjüngung durch eine Seitenfläche (26) eines Innenspanraumes (27) und eines Spangrundes (28) aufweist.

7. Schaftwerkzeug nach Anspruch 6, dadurch gekennzeichnet, daß die Spanraumverjüngung zur Stirnseite (18) des Schneidkopfes (13) als Rundung oder als Schräge oder als elliptischer Übergang ausgebildet ist.

8. Schaftwerkzeug nach einem der vorhergehenden Ansprüche, dadurch gekennzeichnet, daß an der Stirnseite (18) des Schneidkopfes (13) von einer Öffnung des Längskanals (17) für Kühl-/Schmiermittel zum engsten Querschnitt (24) des Spanraumes (14) führende Vertiefungen vorgesehen sind, die vorzugsweise einen trichterförmigen Querschnitt aufweisen, der sich zum Spanraum (14) verjüngt.

9. Schaftwerkzeug nach Anspruch 6, dadurch gekennzeichnet, daß im äußeren Randbereich der Seitenfläche (26) des Innenspanraumes (27) eine zumindest teilweise entlang des Spanraumes (14) verlaufende Wulst vorgesehen ist.

10. Schaftwerkzeug nach einem der vorhergehenden Ansprüche, dadurch gekennzeichnet, daß der verjüngende Spanraumabschnitt (22) in radialer Richtung gesehen eine nacheilende Seitenfläche (26) aufweist.
